(19) Europäisches Patentamt
European Patent Office
Office européen des brevets

(11) EP 2 338 717 A2

(12) EUROPEAN PATENT APPLICATION

(43) Date of publication:
29.06.2011 Bulletin 2011/26

(51) Int Cl.:
B60J 7/057 (2006.01)  E05F 15/00 (2006.01)

(21) Application number: 10195874.2

(22) Date of filing: 20.12.2010

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 24.12.2009 JP 2009292441

(71) Applicant: AISIN SEIKI KABUSHIKI KAISHA
Kariya-shi, Aichi 448-8650 (JP)

(72) Inventor: Suzuki, Shintaro
Kariya-shi Aichi 448-8650 (JP)

(74) Representative: Winter, Brandl, Fürniss, Hübner,
Röss, Kaiser, Polte - Partnerschaft
Bavariaring 10
80336 München (DE)

(54) Entrapment detection apparatus for opening/closing member

(57) An entrapment detection apparatus for an opening/closing member includes an opening/closing member (3), a driving member (13) configured to be moved by an actuation of a driving power source (5), a moving direction changing mechanism (4) converting a moving direction of the opening/closing member in accordance with a movement of the driving member and transmitting a force directed based on the movement of the driving member to open/close the opening/closing member, a detecting portion (31) detecting an entrapment of an object by comparing levels of a driving force of the driving power source and a threshold value, an obtaining portion (31) obtaining an opening/closing operational force of the opening/closing member on the basis of a mechanical structure of the moving direction changing mechanism, and a modifying portion (31) modifying at least one of the driving force of the driving power source and the threshold value so that an entrapment detection load is assumed to be constant.

FIG. 2

**Description**

TECHNICAL FIELD

This disclosure relates to an entrapment detection apparatus for an opening/closing member.

BACKGROUND DISCUSSION

A vehicle includes a known apparatus for opening and closing an opening/closing member such as a roof panel by an electric power in response to an operation of a switch by a driver. The known apparatus includes, for example, a detection means for detecting an entrapment of an external object by the opening/closing member, and performs a countermeasure transaction such as stopping or reversing the operation of the opening/closing member when the detection means detects the entrapment of the external object.

Known detection means are disclosed, for example, in JP2004-3159A (hereinafter referred to as Patent reference 1) and JP2002-295127A (hereinafter referred to as Patent reference 2). The detection means disclosed in Patent reference 1 and Patent reference 2, basically, detects the entrapment of the external object at the opening/closing member by comparing levels of a driving force of a driving power source (e,g., electric motor) for actuating the opening/closing member to open and close and a threshold value. Patent reference 1 and Patent reference 2 also disclose methods for reducing the influence of secular change or deterioration.

According to Patent reference 1 and Patent reference 2, basically, the driving force of the driving power source is applied as it is for detecting the entrapment of the external object at the opening/closing member. In other words, according to Patent reference 1 and Patent reference 2, an actual force applied for opening and closing the opening/closing member (corresponding to a load applied when the external object is entrapped) based on structural characteristics of a mechanism which links the driving power source and the opening/closing member is not considered. Accordingly, even if the threshold value which is compared with the driving force of the driving power source is constant, that is, even if the detection sensitivity is constant, a detected load when the external object is entrapped may vary depending on an opening/closing position of the opening/closing member.

On the other hand, considering the foregoing drawbacks, as explained in Patent reference 1, a range for the opening/closing position of the opening/closing member may be divided into plural regions, and a threshold value for detecting whether the external object is entrapped may be set for each of the regions. However, according to the known construction disclosed in Patent reference 1, in a case where the threshold value for detecting the entrapment of the external object at the opening/closing member for each of the regions is set, it is required to obtain the threshold value favorable for each of the regions empirically, which may increase man-hours for the development.

A need thus exists for an entrapment detection apparatus for an opening/closing member which detects an entrapment of the external object by the opening/closing member favorably without increasing man-hours for the development.

SUMMARY

In light of the foregoing, the disclosure provides an entrapment detection apparatus for an opening/closing member, which includes an opening/closing member opening/closing an opening portion formed on a structure, a driving member configured to be moved by an actuation of a driving power source, a moving direction changing mechanism provided between the driving member and the opening/closing member for converting a moving direction of the opening/closing member in accordance with a movement of the driving member and transmitting a force directed based on the movement of the driving member to the opening/closing member to open/close the opening/closing member, a detecting portion detecting an entrapment of an object at the opening/closing member by comparing levels of a driving force of the driving power source actuating the driving member to move and a threshold value, an obtaining portion obtaining an opening/closing operational force of the opening/closing member which is determined relative to the driving force of the driving power source and changing in accordance with a moving position of the driving member on the basis of a mechanical structure of the moving direction changing mechanism, and a modifying portion modifying at least one of the driving force of the driving power source and the threshold value which are compared by the detecting portion so that an entrapment detection load is assumed to be constant on the basis of the obtained opening/closing operational force of the opening/closing member.

According to the constructions of the disclosure, the obtaining portion obtains the opening/closing operational force of the opening/closing member determined relative to the driving force of the driving power source in accordance with the moving position of the driving member. The modifying portion modifies at least one of the driving force of the driving power source and the threshold value so that an entrapment detection load is assumed to be constant on the basis of the obtained opening/closing operational force of the opening/closing member. Accordingly, the detecting portion favorably detects the entrapment of the opening/closing member based on the opening/closing operational force of the opening/closing member which is obtained on the basis of the mechanical structure of the moving direction changing mechanism when comparing the driving force of the driving power source and the threshold value. Further, because the opening/closing operational force of the opening/closing member relative to the driving force of the driving power source is obtained based on the mechanical structure of the moving direction changing mechanism, the opening/closing operational force of the opening/closing member can be obtained from an equation (i.e., the equation of motion) indicating the structures of the moving direction changing mechanism at a stage of the development when the structures of the moving direction changing mechanism is finalized. Accordingly, there is no need to confirm the opening/closing operational force by, for example, experiments, which reduces man-hours for the development.

According to another aspect of the disclosure, the modification of the threshold value is varied in response to a changing ratio of an entrapment load which is varied by the moving direction changing mechanism.

According to further aspect of the disclosure, the driving force is modified by changing a moving amount of the driving member per a unit time in accordance with the changing ratio of the entrapment load which is varied by the moving direction changing mechanism, or by changing a unit time determining a moving amount of the driving member.

According to still another aspect of the disclosure, the entrapment detection apparatus for the opening/closing member further includes a support bracket supporting the opening/closing member. The moving direction changing mechanism includes a guide pin provided at one of the driving member and the support bracket to project, and a guiding slot portion formed on the other of the driving member and the support bracket and to which the guide pin is inserted. The force is transmitted to convert the moving direction of the opening/closing member in accordance with the moving direction of the driving member by pressing one of the guide pin provided at the driving member and the guiding slot portion by the other of the guiding slot portion and the guide pin in response to the movement of the driving member.

According to the construction of the disclosure, the moving direction of the driving member is converted and the force is transmitted to the opening/closing member to open/close the opening/closing member with a simple structure that the guide pin presses the inner wall surface of the guiding slot portion in response to the movement of the driving member.

According to another aspect of the disclosure, the modifying portion modifies at least one of the driving force or the threshold value having an angle formed by the guiding slot portion and the moving direction of the driving member at the guide pin serving as an apex as a parameter.

According to the construction of the disclosure, the modifying portion modifies at least one of the driving force and the threshold value so that a level of the entrapment detection load is assumed to be constant with a simple calculation having the angle based on the mechanical structure as a parameter.

According to further aspect of the disclosure, the entrapment detection apparatus for the opening/closing member further includes a weather strip provided at a rim portion of the opening/closing member, the weather strip configured to elastically contact a rim portion of the opening portion of the opening/closing member when the opening/closing member is fully closed. The modifying portion modifies at least one of the driving force of the driving power source and the threshold value so that the entrapment detection load is assumed to be constant to reduce a sensitivity for detecting the entrapment of the object at a closing timing of the opening/closing member at which the weather strip elastically contacts the rim portion of the opening portion of the opening/closing member when fully closing the opening/closing member.

According to the construction of the disclosure, for example, even if the driving force of the driving power source is increased due to an elastic contact of the weather strip to the rim portion of the opening portion in response to the closing operation of the opening/closing member, an erroneous detection of the entrapment of the object because of the increase of the driving force of the driving power source can be restrained.

BRIEF DESCRIPTION OF THE DRAWINGS

The foregoing and additional features and characteristics of this disclosure will become more apparent from the following detailed description considered with the reference to the accompanying drawings, wherein:

Fig. 1A is a perspective view of a roof apparatus to which an entrapment detection apparatus for an opening/closing member is mounted according to an embodiment disclosed here;

Fig. 1B is a perspective view of the roof apparatus to which the entrapment detection apparatus for the opening/closing member is mounted according to the embodiment disclosed here;

Fig. 1C is a perspective view of the roof apparatus to which the entrapment detection apparatus for the opening/closing member is mounted according to the embodiment disclosed here;

Fig. 2 is a lateral view of the roof apparatus to which the entrapment detection apparatus for the opening/closing member is mounted according to the embodiment disclosed here;

Fig. 3 is a schematic view for obtaining an entrapment load according to the embodiment disclosed here;

Fig. 4 is a schematic view for obtaining the entrapment load according to the embodiment disclosed here;

Fig. 5 is a graph showing changes in an entrapment load ratio in accordance with a position of a driving member (driving shoe) according to the embodiment disclosed here;

Fig. 6 is a block diagram illustrating an electrical structure according to the embodiment disclosed here; and

Fig. 7 is a flowchart showing controlling steps for the embodiment disclosed here.

DETAILED DESCRIPTION

Embodiments of the entrapment detection apparatus for the opening/closing member will be explained with reference to illustrations of drawing figures as follows.

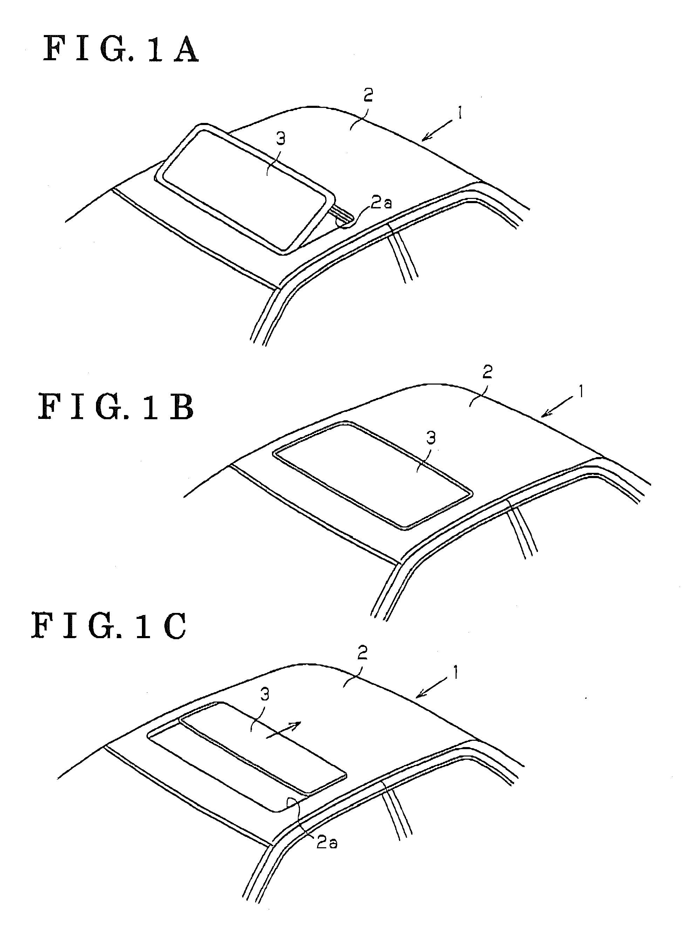

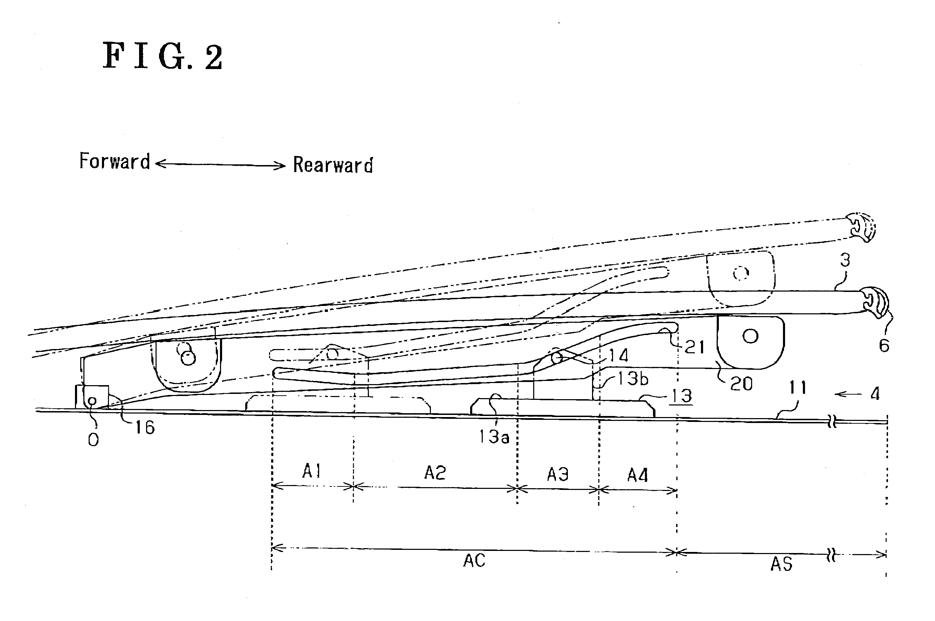

Fig. 1 is a perspective view of a roof apparatus provided at a roof 2 of a vehicle 1. As shown in Fig. 1, an opening portion 2a is formed on the roof 2 of the vehicle 1 and a sunroof (roof pane) 3 is provided for opening and closing the opening portion 2a. The sunroof 3 is configured to perform a tilting operation moving from a tilt-up position (i.e., a fully open state) shown in Fig. 1A to a tilt-down position (i.e., a fully closed state) shown in Fig. 1B and a sliding operation for opening and closing the opening portion 2a by the roof apparatus illustrated in Fig. 2. In the sliding operation, the sunroof 3 is configured to open the opening portion 2a as shown in Fig. 1C (i.e., open state at the sliding operation) from the fully closed state.

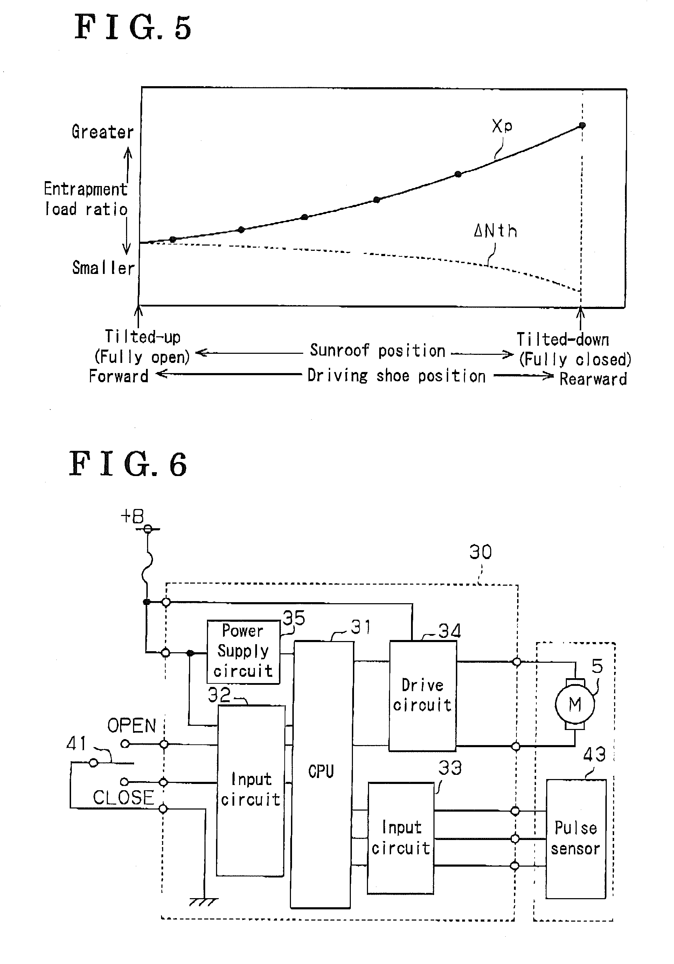

As shown in Fig. 2, a pair of guide rails 11, 11 which extend in a front-rear direction of a vehicle are provided at rim portions of the opening portion 2a, respectively, in a vehicle width direction. A driving shoe 13 serving as a driving member is attached to the guide rail 11 to be movable in the front-rear direction of the vehicle. The driving shoe 13 is connected to an electric motor 5 (see Fig. 6) serving as a driving power source to be actuated. The driving shoe 13 is actuated to move in the front-rear directions of the vehicle along the guide rail 11 by the electric motor 5. Particularly, for example, a rotation shaft of the electric motor 5 is connected to a transmission member (e.g., a driving belt, a push-pull cable, or the like) which is pushed and pulled in response to a rotation of the rotation shaft of the electric motor 5. The electric motor 5 is connected to the driving shoe 13 via the transmission member. The electric motor 5 moves the driving shoe 13 in the front-rear directions by pushing and pulling the transmission member along the guide rail 11 by means of the rotation of the rotation shaft. The driving shoe 13 includes a block-shaped shoe portion 13a which is configured to be guided by the guide rail 11 to slide and a support wall portion 13b. The support wall portion 13b formed with a plate is provided at the shoe portion 13a in a standing manner. A guide pin 14 is secured to a top end portion of the support wall portion 13b. The guide pin 14 is formed in an approximately cylindrical shape which projects outwardly in the vehicle width direction.

A bracket 16 shaped in a plate projecting upward in Fig. 2 is attached to a front portion of the guide rail 11 to be movable in the front-rear direction of the vehicle along the guide rail 11, A front end portion of a support bracket 20 positioned extending in the front-rear directions of the vehicle is connected to the bracket 16 to be rotatable about a rotational shaft O serving as a rotational axis. The support bracket 20 includes a guiding slot 21 gradually inclining in a height direction of the vehicle as to be closer to a rearward of the vehicle. The guide pin 14 is slidably positioned in the guiding slot 21.

Areas AC and AS are defined at a front portion and a rear portion of the guide rail 11, respectively. The areas AC and AS are defined with reference to a rear end of the guiding slot 21 shown in Fig. 2 where the sunroof 3 is in the fully closed state. The area AC is further divided into areas A1 to A4 corresponding to portions of the guiding slot 21. More particularly, a first one-fifth portion at the front portion of the guiding slot 21 is defined as the area A1, the area A2 continuing from the area A1 corresponds to two-fifth of the entire length of the guide slot 21, the area A3 continuing from the area A2 corresponds to one-fifth of the entire length of the guide slot 21, and the area A4 continuing from the area A3 to the rear end of the guiding slot 21 corresponds to one-fifth of the entire length of the guide slot 21. As foregoing, the guiding slot 21 formed on the support bracket 20 which is rotatable about the rotational shaft O and the guide pin 14 constructs a moving direction changing mechanism 4. The sunroof 3 is provided at the support bracket 20 for covering an upper side of the support bracket 20. Thus, the sunroof 3 integrally rotates about the rotational shaft O with the support bracket 20.

When the guide pin 14 slides in the guiding slot 21 in a forward direction of the vehicle in response to a movement of the driving shoe 13 in the forward direction of the vehicle, the guide pin 14 pushes an inner wall surface of the guiding slot 21 upwardly in accordance with a configuration of the guiding slot 21 in Fig. 2. In those circumstances, the support bracket 20 rotates about the rotational shaft O to lift (i.e., tilt up) a rear end of the support bracket 20 together with the sunroof 3 to establish the fully open state (see two-dotted line in Fig. 2). On the other hand, when the guide pin 14 slides in the guiding slot 21 in a rearward direction of the vehicle in response to the movement of the driving shoe 13 in the rearward direction of the vehicle, the guide pin 14 pushes an inner wall surface of the guiding slot 21 downwardly in accordance with the configuration of the guiding slot 21 in Fig. 2. In those circumstances, the support bracket 20 rotates about the rotational shaft O in a reverse manner from the case where the guide pin 14 slides in the guiding slot 21 in the forward direction of the vehicle to decline (i.e., tilt down) the rear end of the support bracket 20 together with the sunroof 3 to establish the fully closed state (see a solid line in Fig. 2). When the driving shoe 13 further moves in the rearward direction of the vehicle from the fully closed state to move the guide pin 14 to the rear end of the guiding slot 21, the sunroof 3 further declines the level to tilt down. Further, in response to the movement of the driving shoe 13 in the rearward direction of the vehicle, the guide pin 14 pushes an inner wall surface of the guiding slot 21 in the rearward direction. Then, the sunroof 3 moves in the rearward direction of the vehicle to overlap with the roof 2 to be hid under the roof 2 to release the opening portion 2a (i.e., open state). When changing the states from the open state to the fully closed state, the sunroof 3 moves forward by means of a check mechanism in response to the movement of the driving shoe 13 in the forward direction of the vehicle. When the sunroof 3 moves to the front end, the check mechanism is released, and thereafter, in response to the movement of the driving shoe 13 in the forward direction, the guide pin 14 moves in the guiding slot 21 in the forward direction of the vehicle to tilt up the sunroof 3 to transit to the fully closed state. Thus, according to the construction of the embodiment, the tilting operation and the sliding operation of the sunroof 3 are performed by the movement of the driving shoe 13 in the front-rear directions of the vehicle along the guide rail 11.

A weather strip 6 is fluid-tightly provided at a peripheral portion of the sunroof 3. The weather strip 6 is, for example, made from a rubber member and having an approximately D-shape in a cross-section, When closing the sunroof 3, the weather strip 6 fluid-tightly contacts a rim portion of the opening portion 2a (see Fig. 1) to restrain the water from penetrating a vehicle compartment.

Fig. 6 shows an electrical structure of a controller 30 mounted to the vehicle 1 and a peripheral structure of the controller 30. As shown in Fig. 6, the controller 30 includes a CPU (central processing unit) 31 serving as an obtaining means (obtaining portion), a modifying means (modifying portion), and a detecting means (detecting portion), input circuits 32, 33 electrically connected to the CPU 31, and a drive circuit 34. The CPU 31 integrally includes a ROM storing various control programs for an arithmetic processing, a RAM temporarily memorizing various data (e.g., results of the arithmetic processing), and a timer, or the like. A power-supply voltage which is attained by converting a battery voltage +B of a battery to a predetermined level of electric voltage via a power supply circuit 35 is supplied to the CPU 31.

The CPU 31 is connected to an operation switch 41 via the input circuit 32 and detects whether an opening/ closing operation of the sunroof 3 is performed in the vehicle compartment on the basis of a signal from the operation switch 41. Further, the CPU 31 is connected to a pulse sensor 43 via the input circuit 33 and detects a rotation angle A and a rotation speed N, or the like, of the electric motor 5 on the basis of a pulse signal from the pulse sensor 43. The battery voltage +B of the battery is supplied to the drive circuit 34 and the electric motor 5 is connected to the drive circuit 34. The CPU 31 outputs a control signal in accordance with a signal (i,e., opening/closing operation signal) from the operation switch 41. The drive circuit 34 switches a polarity of the battery voltage +B supplied to the electric motor 5 based on the control signal from the CPU 31 and supplies the battery voltage +B to the electric motor 5. Accordingly, the electric motor 5 is actuated to rotate in a rotational direction in accordance with the signal from the operation switch 41 to open/close the sunroof 3. When the supply of the battery voltage +B to the motor 5 is stopped, the rotation of the electric motor 5 is stopped to stop the open/close operation of the sunroof 3.

The CPU 31 detects a moving position P of the driving shoe 13 on the basis of the rotation angle A and obtains or computes various information. Particularly, when the guide pin 14 moves in the forward direction during the sliding operation of the sunroof 3 under a condition where the driving shoe 13 (the guide pin 14) is positioned within the area AS, a detection whether an external object is entrapped is performed between a front end portion of the sunroof 3 and a front end portion of the opening portion 2a (roof 2). In those circumstance, because the moving direction of the driving shoe 13 and the moving direction of the sunroof 3 are consistent with each other, the CPU 31 performs the detection of whether an external object is entrapped on the basis of a threshold value corresponding to a predetermined entrapment load (i.e., a reference threshold value $\Delta Nth0$). That is, the CPU 31 detects a rotation speed variable $\Delta N$ serving as a driving force on the basis of time variation of the rotation speed N and detects that an external object is entrapped by the sunroof 3 when a level of the rotation speed variable $\Delta N$ exceeds the reference threshold value $\Delta Nth0$ by comparing the level (absolute value) of the rotation speed variable $\Delta N$ and the threshold value $\Delta Nth$ (e.g., the reference threshold value $\Delta Nth0$) (detecting means (detecting portion)). When it is detected that an external object is entrapped, CPU 31, for example, stops the actuation of the electric motor 5 to stop the operation of the sunroof 3, or reverse the rotational direction of the electric motor 5 to reverse the moving direction of the sunroof 3, or the like, in order to avoid the external object from being entrapped.

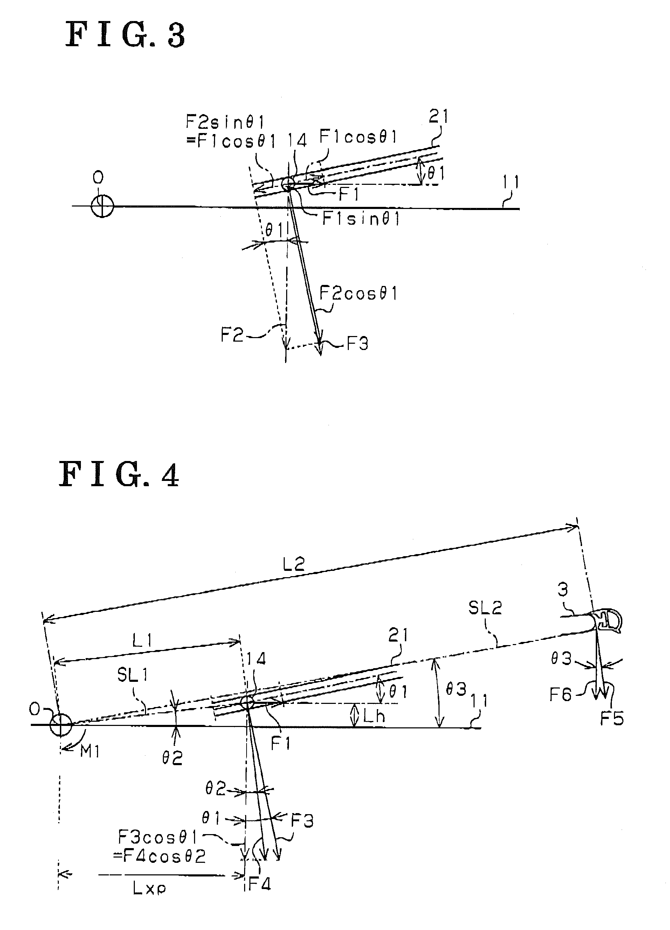

On the other hand, during the tilting operation of the sunroof 3 in a case where the driving shoe 13 (the guide pin 14) is positioned within the area AC, the.guide pin 14 slides within the guiding slot 21 in accordance with the moving direction of the driving shoe 13 to change the moving direction of the sunroof 3. This mechanical structure is defined as the moving direction changing mechanism 4. In consequence, based on this mechanical structure, the threshold value $\Delta Nth$ (i.e., reference threshold value $\Delta Nth0$) is modified so that an entrapment of an external object during the tilting operation of the sunroof 3 is detected at a level of the load which is substantially the same with the entrapment load during the sliding operation. The tilting operation will be explained in more details hereinafter. As shown in Figs. 3 and 4, the position of the guide pin 14 in the area AC (i.e., area A1 to A4) is detected based on a distance Lxp between the driving shoe 13 and the rotation shaft O which varies in accordance with the position of the driving shoe 13. An angle θ1, which is formed by the guide rail 11 (i.e., the moving direction of the guide pin 14) and the guiding slot 21 at the guide pin 14 serving as an apex, is obtained. The angle θ1 is determined at different angles depending on each of the areas A1 to A4 where the guide pin 14 positions.

The CPU 31 calculates various information which is calculable using a trigonometric function based on a relationship between a height Lh which is defined by a position of the guide pin 14 relative to the guide rail 11 and the distance Lxp because the height Lh is constant. More particularly, the CPU 31 calculates an angle θ2, an angle θ3, and a distance L1. The angle θ2 is formed by a line SL 1, which is formed by connecting the center of the guide pin 14 and the rotation shaft O, and the guide rail 11 at the rotation shaft O serving as an apex. The angle θ3 is formed by a line SL2, which is formed by connecting the rotation shaft O and a rear rim portion of the sunroof 3, and the guide rail 11 at the rotation shaft O serving as an apex. The distance L1 is defined as a distance between the rotation shaft O and the guide pin 14. Further, the CPU 31 detects the rotation speed variable ΔN serving as a driving force based on the time variation of the rotation speed N and detects that an external object is entrapped by the sunroof 3 when a level of the rotation speed variable ΔN exceeds a reference threshold value ΔNth by comparing the level (absolute value) of the rotation speed variable ΔN and the threshold value ΔNth (detecting means (detecting portion)). When it is detected that an external object is entrapped, the CPU 31, for example, stops the actuation of the electric motor 5 to stop the operation of the sunroof 3, or reverse the rotational direction of the electric motor 5 to reverse the moving direction of the sunroof 3, or the like, in order to avoid an external object from being entrapped. Upon the detection whether an external object is entrapped, the CPU 31 obtains an opening/closing driving force of the sunroof 3 (i.e., corresponding to a substantial entrapment load) relative to the rotation speed variable ΔN in accordance with the moving position P of the driving shoe 13 on the basis of the mechanical structure of the moving direction changing mechanism 4 (obtaining means (obtaining portion)). Then, the CPU 31 modifies the threshold value ΔNth based on the obtained opening/closing driving force (modifying means (modifying portion)).

A relationship between a driving force F1 of the electric motor 5 in connection with the modification of the threshold value ΔNth and an opening/closing operational force F6 of the sunroof 3 will be explained as follows. Figs. 3 and 4 show schematic views of the loads when the sunroof 3 is tilted down. As shown in Fig. 3, the driving shoe 13 which attains the driving force F1 from the electric motor 5 slides in the rearward direction along the guide rail 11 so that the guide pin 14 pushes the inner wall surface of the guiding slot 21 with the load (driving force) F1 in the rearward direction of the vehicle corresponding to the direction being parallel to the guide rail 11. In those circumstances, because the guide rail 11 (i.e., the moving direction of the guide pin 14) and the guiding slot 21 form the angle θ1, the load F1 is resolved into components, that is, a force F1cosθ1 which is directed to a rearward extending direction of the guiding slot 21 and force F1sinθ1 which is directed to a downward direction orthogonal to the guiding slot 32. In those circumstances, because the guide pin 14 is fixed to the driving shoe 13 and the driving shoe 13 moves only along the guide rail 11, the guide pin 14 does not move in the extending direction of the guiding slot 21. That is, a force (F1cosθ1) which has the same force level with the F1cosθ1 and is directed to a reverse direction (i.e., forward direction in the extending direction of the guiding slot 21) is applied to the guide pin 14. Because the driving shoe 13 moves along the guide rail 11 (i.e., does not move in an up-down direction), this force (F1cosθ1) is equal to a component force of a load F2 applied to the guide pin 14 in a vertically downward direction via the driving shoe 13 along the guiding slot 21. In other words, as shown in Fig. 3, F1cosθ1 is assumed to be equal to F2sinθ1. Further, the load F2 is resolved into components, that is, into a force F2cosθ1 directed to a downward direction orthogonal to the guiding slot 21 and the force F1cosθ1. Accordingly, when the driving shoe 13 moves in the rearward direction of the vehicle, a load F3 which the guide pin 14 applies in the downward direction orthogonal to the guiding slot 21 is assumed to be a resultant force of the force F1sinθ1 and the force F2cosθ1.

As described above, because the force F2sinθ1 which has the same force level to and is directed to a reverse direction from the force F1cosθ1 affects, the load (force) F2 can be shown as a function of the load (force) F1 as indicated with an equation 1. Further, based on a relationship of the equation 1, the load (force) F3 can be shown as a function of the load (force) F1 as indicated with an equation 2.

[Formula 1]

$$F1\cos\theta = F2\sin\theta$$

$$F2 = F1\frac{\cos\theta1}{\sin\theta1} \qquad \text{(Equation 1)}$$

[Formula 2]

$$F3 = F1\sin\theta1 + F2\cos\theta1$$

$$= F1\sin\theta1 + F1\frac{\cos^2\theta1}{\sin\theta1}$$

$$= F1\frac{(\sin^2\theta1 + \cos^2\theta1)}{\sin\theta1}$$

$$= F1/\sin\theta1 \qquad \text{(Equation 2)}$$

As shown in Fig. 4, the load (force) F3 generates a moment M1 applied to the support bracket 20 for rotating in a clockwise direction about the rotation shaft O. Here, a line SL1, which is formed by connecting the center of the guide pin 14 and the center of the rotation shaft O, and the guide rail 11 forms the angle θ2. Thus, substituting the load (force) F3 to a load (force) F4 directed in an orthogonal direction of the line SL1 in order to obtain the moment M1, according to the relationship shown in Fig. 4, a component of cosθ1 of the load (force) F3 and a component of cosθ2 of the load (force) F4 are assumed to be equal to each other (i.e., F3cosθ1 = F4cosθ2). Accordingly, as shown in an equation 3 as follow, the load F4 can be described as a function of F3. Further, based on the relationships shown in Formula 2, the load (force) F4 can be described as a function of the load (force) F1 as shown in an equation 4 shown hereinafter. Further, provided that a distance between the center of the guide pin 14 and the center of the rotation shaft O is defined as the distance L1, a relationship shown in an equation 5 is established because the moment M1 can be described as the product of the distance L1 and the load (force) F4.

[Formula 3]

$$F4\cos\theta2 = F3\cos\theta1$$

$$F4 = F3\cos\theta1/\cos\theta2 \qquad \text{(Equation 3)}$$

$$= F1\frac{\cos\theta1}{\sin\theta1 \times \cos\theta2} \qquad \text{(Equation 4)}$$

[Formula 4]

$$M1 = L1 \times F4 \qquad \text{(Equation 5)}$$

As described above, the moment M1 for rotating the support bracket 20 in the clockwise direction is generated about the rotation shaft O. In those circumstances, because the sunroof 3 integrally rotates with the support bracket 20, the moment M1 is applied to the sunroof 3. Accordingly, at arbitrary positions, the load deriving from the moment M1 is applied to the sunroof 3. For an explanatory purpose, the load applied to a rear rim portion of the sunroof 3 which is positioned having a distance L2 from the center of the rotation shaft O will be explained as follows.

As shown in Fig. 4, a load (force) F5 directed orthogonally to the line SL2 connecting the center of the rotation shaft O and the rear rim portion of the sunroof 3 in a downward direction is defined, a relationship shown in an equation 6 is established because the moment M1 is described with the product of the distance L2 and the load (force) F5. Further, according to the relationship defined in the equation 4 and the equation 5, the load (force) F5 can be described as a function of the load (force) F1 shown in an equation 7.

[Formula 5]

$$M1 = L2 \times F5 \qquad \text{(Equation 6)}$$

$$F5 = M1 / L2$$

$$\approx \frac{L1}{L2} \times F4$$

$$= F1 \frac{L1}{L2} \frac{\cos\theta1}{\sin\theta1 \times \cos\theta2} \qquad \text{(Equation 7)}$$

The load (force) F5 includes a load (force) F6 as a component directed downward in a vertical direction serving as an operational force for opening/closing. The load (force) F6 corresponds to an entrapment load generated when an external object (foreign matter) is entrapped at the rear rim portion of the sunroof 3. Because the angle θ3 is formed by the line SL2 and the guide rail 11, the load (force) F6 establishes a relationship shown in an equation 8. Further, the load (force) F6 is shown as a function of the load F1 shown in an equation 9 based on the relationship shown in the equation 7.
[Formula 6]

$$F6 = F5\cos\theta3 \qquad \text{(Equation 8)}$$

$$= F1 \frac{L1}{L2} \frac{\cos\theta1 \times \cos\theta3}{\sin\theta1 \times \cos\theta2} \qquad \text{(Equation 9)}$$

Thus, because the distance L2 is a fixed value, the load (force) F6 can be calculated by determining the distance L1, the angle θ1, the angle θ2, and the angle θ3. Further, because the distance L1, the angle θ1, the angle θ2, and the angle θ3 are related to the position of the guide pin 14, that is, the moving position P of the driving shoe 13, the equation 9 can be described as shown in an equation 10 using a function Xp(P) of the moving position P.
[Formula 7]

$$F6 = f(Xp) = F1 \times Xp \qquad \text{(Equation 10)}$$

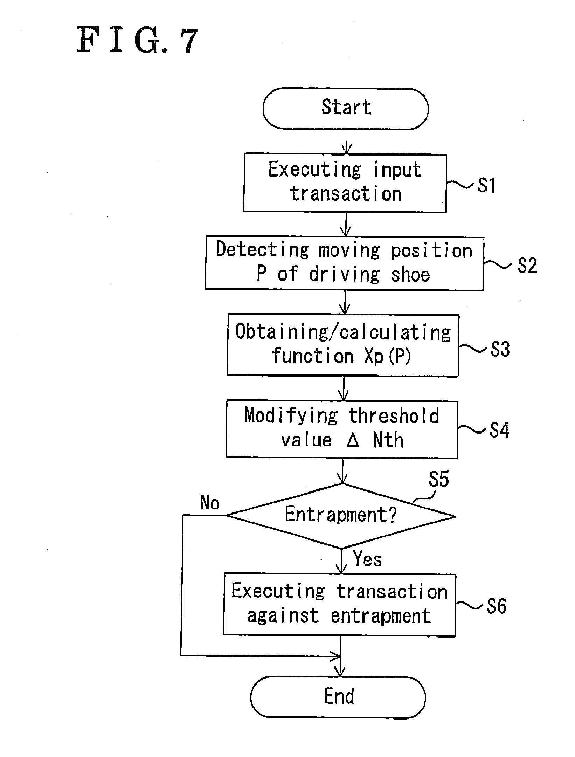

Fig. 5 is a graph showing a transition of the function Xp when the moving position P of the driving shoe 13 is positioned between a position corresponding to the fully open position of the sunroof 3 (i.e., tilt-up position; fully open state) and a position corresponding to the fully closed position (i.e., tilt-down position; fully closed state) (i.e., hereinafter the function XP is referred to as an entrapment load ratio). As shown in Fig. 5, the entrapment load ratio increases in accordance with the position of the driving shoe 13 from a forward position to a rearward position, that is, in accordance with the movement of the sunroof 3 from the fully open state to the fully closed state. That is, when the sunroof 3 is closer to the fully closed state, the load (force) F6 (i.e., entrapment load) determined relative to the load (force) F1 (i.e., actuation force of the electric motor 5) in response to the movement of the driving shoe 13 in the rearward direction is assumed to be greater compared to a case where the sunroof 3 is closer to the fully open state. According to the embodiment, considering a mechanical structure of the moving direction changing mechanism 4, the threshold value ΔNth is modified to enhance the detection sensitivity whether an external object is entrapped based on the rotation speed variable ΔN as the sunroof 3 is closer to the fully closed position. The CPU 31 memorizes various formulas described above and detects that an external object is entrapped based on the threshold value ΔNth derived from the various formulas.
Next, control steps for detecting the entrapment will be explained as follows. Fig. 7 shows a flowchart showing the control steps when opening/closing the sunroof 3 (e.g., when closing the sunroof 3). The transaction shown in Fig. 7 is executed repeatedly at fixed intervals every predetermined time until the actuation of the electric moor 5 is stopped under a condition that the sunroof 3 has started the closing operation by detecting the closing operation of the sunroof 3 based on signals from the operation switch 41 (see Fig. 6).
When the transaction is transited to the foregoing routine, the CPU 31 executes an input transaction of various data at step S1. Then, the CPU 31 detects the moving position P of the driving shoe 13 based on the rotation angle A of the electric motor 5 at Step S2 and calculates / obtains the entrapment load ratio Xp(P) based on the detected moving position P at Step S3.

Then, the CPU 31 modifies the threshold value ΔNth based on the entrapment load ratio Xp at Step S4. More particularly, when a reference threshold value is described as ΔNth_b when the sunroof 3 is in the fully open position, a value dividing the threshold value ΔNth_b by the entrapment load ratio Xp (i.e., ΔNth_b / Xp) is defined as the threshold value ΔNth. As the entrapment load ratio Xp is assumed to be greater when the sunroof 3 is closer to the fully closed position, the entrapment of a foreign object is likely to be detected (i.e., detection sensitivity is enhanced) because the threshold value ΔNth is assumed to be smaller by a level multiplying the threshold value ΔNth by reciprocals of the entrapment load ratio Xp. On the other hand, as the entrapment load ratio Xp is assumed to be smaller when the sunroof 3 is closer to the fully open position, the entrapment of the foreign object is not likely to be detected (i.e., detection sensitivity is declined) because the threshold value ΔNth is assumed to be greater by a level multiplying the threshold value ΔNth by reciprocals of the entrapment load ratio Xp. Accordingly, the sensitivity per se of a detection whether an external object is entrapped is assumed to be approximately constant, and the entrapment detection can be performed by a substantially same level of entrapment detection load Fh irrespective of the position of the opening/closing body. That is, irrespective of the position of the sunroof 3 (driving shoe 13), the previously determined reference threshold value ΔNth_b is modified so that the entrapment detection load Fh is assumed to be constant.

At Step S5, whether the foreign object is entrapped is determined based on the threshold value ΔNth determined at Step S4. The CPU 31 determines that the foreign object is entrapped when the rotation speed variable ΔN is lower than the threshold value ΔNth to execute an transaction against the entrapment at step S6. The transaction against the entrapment is as explained above. Further, at Step S5, the CPU 31 determines that the foreign object is not entrapped when the rotation speed variable ΔN is equal to or greater than the threshold value ΔNth to end the transaction.

As explained above, according to the constructions of the embodiment, the following advantages and effects are attained.

First, according to the embodiment, the CPU 31 obtains the opening/closing operational force F6 of the sunroof 3 relative to the driving force F1 of the electric motor 5 in accordance with the moving position P of the driving shoe 13. The threshold value ΔNth of the electric motor 5 is modified based on the obtained opening/closing operational force F6 by the CPU 31. Thus, by making the threshold value ΔNth variable based on the opening/closing operational force F6 of the sunroof 3 considering the mechanical structures of the moving direction changing mechanism 4 when comparing the levels of the driving force F1 of the electric motor 5 and the threshold value ΔNth, the CPU 31 detects whether an external object is entrapped with the substantially same entrapment detection load Fh irrespective of the position of the driving shoe 13 and thus favorably detects whether an external object is entrapped at the sunroof 3. Further, because the opening/closing operational force F6 of the sunroof 3 relative to the driving force F1 of the electric motor 5 is obtained based on the mechanical structures of the moving direction changing mechanism 4, the opening/closing operational force F6 of the sunroof 3 can be obtained from an equation (i.e., the equation of motion) indicating the structures of the moving direction changing mechanism 4 at a stage of the development when the structures of the moving direction changing mechanism 4 is finalized. Accordingly, there is no need to confirm the opening/closing operational force by, for example, experiments and to change the threshold value ΔNth based on the opening/closing operational force obtained by the experiments, which reduces man-hours for the development.

Second, according to the embodiment, by pressing the inner wall surface of the guiding slot 21 by the guide pin 14 in response to the movement of the driving shoe 13, the moving direction of the driving shoe 13 is converted to transmit the force to the sunroof 3 for opening/closing the sunroof 3.

Third, according to the embodiment, the CPU 31 can modify the threshold value ΔNth to be the substantially same entrapment detection load Fh irrespective of the positions of the driving shoe 13 with a simple calculation having the angles as parameters.

Fourth, according to the constructions of the embodiment, the entrapment detection load at the sliding operation of the sunroof 3 and the entrapment detection load at the tilting operation of the sunroof 3 can be determined to be substantially the same level.

The embodiment may be modified as explained below,

According to the modified embodiment, the driving force F1 of the motor may be detected based on a driving electric current of the motor (motor current). Further, according to the modified embodiment, the threshold value ΔNth may be modified at a final phase of the closing operation of the sunroof 3 in response to a reaction force of the weather strip 6. More particularly, although the threshold value ΔNth is set to be smaller because the entrapment load F6 increases at the final phase of the closing operation of the sunroof 3, there is a possibility that the sunroof 3 cannot be closed with the smaller threshold value ΔNth. Thus, the threshold value ΔNth is set to be greater at the final phase of the closing operation of the sunroof 3 in order to securely close the sunroof 3.

Further, although the threshold value ΔNth is modified based on the opening/closing operational force F6 of the sunroof 3 according to the embodiment, the driving force F1 may be modified instead of the threshold value ΔNth so that the entrapment detection load Fh is assumed to be constant irrespective of the moving position of the driving shoe 13. More particularly, a moving amount of the driving shoe 13 per unit time may be reduced or a unit time for judging a moving amount of the driving shoe 13 may be shortened in response to the level of the entrapment load F6 which increases immediately before completely closing the sunroof 3 by the moving direction changing mechanism 4.

According to the modified embodiment, a connecting manner of the driving shoe 13 and the support bracket 20 may be modified. For example, a guiding groove corresponding to the guiding slot 21 may be formed on the driving shoe 13 and a guide pin corresponding to the guide pin 14 may be secured to the support bracket 20 according to the modified embodiment instead of providing the guiding slot 21 at the support bracket 20 and providing the guide pin 14 at the driving shoe 13.

According to the embodiment, the driving shoe 13 moves for opening the sunroof 3 within a range of a roof top of the vehicle (e.g., in the rearward direction). However, the construction of the embodiment is not limited thereto, and according to the modified embodiment, the constructions of the embodiment are applicable to a case where a foreign object is entrapped between the sunroof 3 and surrounding obstacles (e.g., a wall, or a fence) when the driving shoe 13 moves to move the sunroof 3 beyond a range of a roof top of the vehicle to open (e.g., in the forward direction). In those circumstances, except that the sunroof 3 moves in a reversal direction, basically, the same transaction with the embodiment is conducted.

According to the modified embodiment, the entrapment detection apparatus for the opening/closing member may be applicable to rim portions of the sunroof 3 in a width direction of the vehicle and to the entire sunroof 3 besides the rear rim portion of the sunroof 3. Further, according to the modified embodiment, the function Xp may be calculated based on the rotation speed N or a rotation number of the electric motor 5, or an acceleration speed of the electric motor other than calculating from the position of the guide pin 14 (driving shoe 13).

According to the modified embodiment, the entrapment detection load at the sliding operation of the sunroof 3 and the entrapment detection load at the tilting operation of the sunroof 3 may be determined to be different values (detection loads). Further, according to the modified embodiment, the bracket 16 may be secured to the guide rail 11. In other words, the entrapment detection apparatus for the opening/closing member may be applicable to a roof apparatus in which the sunroof 3 performs only a tilting operation.

According to the modified embodiment, a link mechanism may be applied as the moving direction changing mechanism. The entrapment detection apparatus for the opening/closing member may be applied to an opening/closing member for a vehicle, including a backdoor provided at a rear portion of the vehicle, a door provided at lateral sides of the vehicle (e,g., swing door, slide door), a trunk lid, and a windowpane for the vehicle. Further, the entrapment detection apparatus for the opening/closing member may be applied to an opening/closing member (e.g., door) for a structure (e.g., building) and an opening/closing member for vehicles other than an automobile.

According to the embodiments, a method for detecting an entrapment of an opening/closing member includes an opening/closing member (sunroof) 3 opening/closing an opening portion 2a formed on a structure, a driving member (driving shoe) 13 configured to be moved by an actuation of a driving power source (electric motor) 5, and a moving direction changing mechanism 4 provided between the driving member (driving shoe) 13 and the opening/closing member 3 for converting a moving direction of the opening/closing member 3 in accordance with a movement of the driving member 13 and transmitting a force directed based on the movement of the driving member 13 to the opening/closing member 13 to open/close the opening/closing member 13. According to the method for detecting the entrapment of the opening/closing member (sunroof) 3, the entrapment of an object at the opening/closing member 3 is detected by comparing levels of a driving force of the driving power source (electric motor) 5 actuating the driving member (driving shoe) 13 to move and a threshold value. Further, the method for detecting the entrapment of the opening/closing member (sunroof) 3 includes steps of an obtaining step obtaining an opening/closing operational force of the opening/closing member 3 which is determined relative to the driving force of the driving power source (electric motor) 5 and changing in accordance with a moving position of the driving member (driving shoe) 13 on the basis of a mechanical structure of the moving direction changing mechanism 4, and a modifying step modifying at least one of the driving force of the driving power source 5 and the threshold value which are compared by the detecting portion 31 so that an entrapment detection load is assumed to be constant on the basis of the obtained opening/closing operational force of the opening/closing member 3.

According to the construction of the embodiment (disclosure), the entrapment detection apparatus for the opening/closing member which favorably detects the entrapment of the external object at the opening/closing member (sunroof 3) without increasing the man-hours for the development can be attained.

**Claims**

1. An entrapment detection apparatus for the opening/closing member, comprising:

    an opening/closing member (3) opening/closing an opening portion (2a) formed on a structure;

a driving member (13) configured to be moved by an actuation of a driving power source (5);

a moving direction changing mechanism (4) provided between the driving member (13) and the opening/closing member (3) for converting a moving direction of the opening/closing member (3) in accordance with a movement of the driving member (13) and transmitting a force directed based on the movement of the driving member (13) to the opening/closing member (13) to open/close the opening/closing member (13);

a detecting portion (31) detecting an entrapment of an object at the opening/closing member (3) by comparing levels of a driving force of the driving power source (5) actuating the driving member (13) to move and a threshold value;

an obtaining portion (31) obtaining an opening/closing operational force of the opening/closing member (3) which is determined relative to the driving force of the driving power source (5) and changing in accordance with a moving position of the driving member (13) on the basis of a mechanical structure of the moving direction changing mechanism (4); and

a modifying portion (31) modifying at least one of the driving force of the driving power source (5) and the threshold value which are compared by the detecting portion (31) so that an entrapment detection load is assumed to be constant on the basis of the obtained opening/closing operational force of the opening/closing member 3.

2. The entrapment detection apparatus for the opening/closing member according to claim 1, wherein the modification of the threshold value is varied in response to a changing ratio of an entrapment load which is varied by the moving direction changing mechanism (4).

3. The entrapment detection apparatus for the opening/closing member according to either claim 1 or 2, wherein the driving force is modified by changing a moving amount of the driving member (13) per a unit time in accordance with the changing ratio of the entrapment load which is varied by the moving direction changing mechanism (4), or by changing a unit time determining a moving amount of the driving member (13).

4. The entrapment detection apparatus for the opening/closing member according to any one of claims 1 to 3, further comprising:

a support bracket (20) supporting the opening/closing member (3); wherein

the moving direction changing mechanism (4) includes a guide pin (14) provided at one of the driving member (13) and the support bracket (20) to project, and a guiding slot portion (21) formed on the other of the driving member (13) and the support bracket (20) and to which the guide pin (14) is inserted; and wherein

the force is transmitted to convert the moving direction of the opening/closing member (3) in accordance with the moving direction of the driving member (13) by pressing one of the guide pin (14) provided at the driving member (13) and the guiding slot portion (21) by the other of the guiding slot portion (21) and the guide pin (14) in response to the movement of the driving member (13).

5. The entrapment detection apparatus for the opening/closing member according to claim 4, wherein the modifying portion modifies at least one of the driving force or the threshold value having an angle formed by the guiding slot portion (21) and the moving direction of the driving member (13) at the guide pin (14) serving as an apex as a parameter.

6. The entrapment detection apparatus for the opening/closing member according to claim 5, further comprising:

a weather strip (6) provided at a rim portion of the opening/closing member (3), the weather strip (6) configured to elastically contact a rim portion of the opening portion (2a) of the opening/closing member (3) when the opening/closing member (3) is fully closed; wherein

the modifying portion modifies at least one of the driving force of the driving power source (5) and the threshold value so that the entrapment detection load is assumed to be constant to reduce a sensitivity for detecting the entrapment of the object at a closing timing of the opening/closing member (3) at which the weather strip (6) elastically contacts the rim portion of the opening portion (2a) of the opening/closing member (3) when fully closing the opening/closing member.

# F I G. 1 A

# F I G. 1 B

# F I G. 1 C

# FIG. 2

Forward ⟵⟶ Rearward

EP 2 338 717 A2

# FIG. 3

# FIG. 4

14

# FIG. 5

Greater
Smaller

Entrapment
load ratio

Xp

ΔNth

Tilted-up
(Fully open)
Forward ← Sunroof position → (Fully closed)
Driving shoe position → Rearward

Tilted-down
(Fully closed)

# FIG. 6

# F I G. 7

```
              ┌─────────────────┐
              │      Start       │
              └─────────────────┘
                       │
                       ▼
              ┌─────────────────┐
              │ Executing input │  ～S1
              │   transaction   │
              └─────────────────┘
                       │
                       ▼
         ┌───────────────────────┐
         │ Detecting moving position │  ～S2
         │   P of driving shoe    │
         └───────────────────────┘
                       │
                       ▼
           ┌─────────────────────┐
           │ Obtaining/calculating │  ～S3
           │    function Xp(P)     │
           └─────────────────────┘
                       │
                       ▼
            ┌───────────────────┐
            │ Modifying threshold │  ～S4
            │    value △ Nth      │
            └───────────────────┘
                       │
                       ▼        S5
      No          ◇─────────────◇
    ┌─────────────  Entrapment?  ─
    │           ◇─────────────◇
    │                  │ Yes
    │                  ▼
    │       ┌─────────────────────┐
    │       │ Executing transaction │  ～S6
    │       │  against entrapment   │
    │       └─────────────────────┘
    │                  │
    └──────────────────┤
                       ▼
              ┌─────────────────┐
              │      End         │
              └─────────────────┘
```

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004003159 A

- JP 2002295127 A